# EUROPEAN PATENT SPECIFICATION

(11) **EP 1 980 781 B1**
(45) Date of publication and mention of the grant of the patent: **23.06.2010**
(21) Application number: 07425214.9
(22) Date of filing: 13.04.2007
(51) Int. Cl.: F16L 25/00, H02G 3/06

(54) **Coupling for spiral corrugated hoses**
Verbindng für Spiralwellschläuche
Raccord pour des flexibles ondulés en spirales

(43) Date of publication of application: 15.10.2008
(73) Proprietor: BUCCHI S.R.L., 48022 Lugo (RA) (IT)
(72) Inventor: Bucchi, Domenico, 48022 Lugo (Ravenna) (IT)
(74) Representative: Paolizzi, Marco

(56) References cited:
- WO-A-01/25671
- FR-A1- 2 528 533
- GB-A- 847 721

## Description

This invention relates to a coupling for spiral corrugated hoses.

As is known, spiral corrugated hoses have spiral (or helical) ribbing or corrugations at least on their outside surface. The corrugations extend along the axis of the hose and have a defined pitch, that is to say, the distance between two consecutive spiral corrugations measured along the axis of the hose. The outside surface of the hose thus has alternate ridges and grooves along its axis, which give it its characteristic form. The distance between two consecutive ridges or two consecutive grooves along the axis of the hose is the spiral pitch. The spiral ribbing corresponds to the ridges which confer strength on the hose. The material between one rib and the next corresponds to the grooves which confer considerable flexibility. The hose is much stiffer at the ridges than it is at the grooves. The ridges (and hence the grooves) follow the same spiral path as the corrugations.

Generally speaking, a spiral corrugated hose is composed of a core made of plastic or flexible metal, shaped like a spiral with a certain pitch (that is, a given distance between two successive spirals along the hose axis) and shrouded with plastic (or light metal) that covers the spirals and connects one spiral with the next along the hose axis. The core defines the ribbing and hence the ridges on the outside surface of the hose. The material between one spiral and another defines the grooves that alternate with the ridges.

Usually, the ridges and grooves are much more marked on the outside surface than they are on the inside surface where, instead, they are barely discernible or altogether nonexistent.

Spiral corrugated hoses are used not only to carry fluids but also to protect and/or cover electric lines, signal transmission lines, waveguides, optical fibres and the like.

For carrying fluids, hoses of this type are normally used in applications where operating pressure is relatively low (around 3 to 4 BAR at most). Some example applications where liquids are carried at low pressure are: water distribution for gardens and fountains (including ornamental fountains for urban spaces); water distribution systems for limited spaces, such as boats, for example. Some example applications where gases are carried at low pressure are: distribution of air or gas for cleaning filters and the like; low vacuum systems for limited spaces.

In all these applications, couplings are necessary to join different parts of a system: for example, to join a hose to a device forming part of a distribution network (whether for a fluid, electricity, or other), a hose to another device, a hose to a connector, a hose to a tap and so on.

In fluid carrying applications, the couplings must provide a fluid seal that prevents fluid from leaking out when operating pressure is reached and must hold the hose securely to stop it from coming loose.

If the spiral corrugated hose is used to protect and/or cover electric lines, signal transmission lines, waveguides, optical fibres and the like, the coupling must prevent accidental detachment as well a s infiltration of vapours and/or g as or liquids inside the hose. The seal against infiltration is particularly important when the element covered by the hose can be damaged by the potentially aggressive action of the substances in the atmosphere surrounding the hose (for example, brine and salt spray in a marine environment), or when contact between the substances in the atmosphere surrounding the hose and the element covered by the hose could be dangerous (short circuit, fire, explosion, etc.).

To join different lengths of hose or to connect a hose to a distribution network, to a device, to a connector or the like, special couplings are used.

Couplings for spiral corrugated hoses known to prior art comprise a coupling body from which a cylindrical element, known as "hose fitting", projects. The hose fitting has a nominal outside diameter that is slightly larger than the nominal inside diameter of the hose. One end of the hose is pushed onto the hose fitting and fixed to the latter by clamping means which hold the end of the hose against the outside surface of the hose fitting. The clamping means provide the mechanical tightness and fluid seal of the coupling. The outside surface of the hose fitting usually has annular barbs that penetrate the hose from the inside and, acting in conjunction with the compressive force exerted by the clamping means, create a fluid seal. In some cases, instead of annular barbs, the hose fitting has spiral barbs which enable the end of the hose to be literally "screwed" onto the hose fitting using the spiral grooves, however slight, present on the inside surface of a spiral corrugated hose. In order to exert a force capable of preventing the hose from accidentally slipping off the fitting, the section of the barbs in a plane containing the axis of the hose fitting is usually sawtoothed, with the long oblique side facing a first end of the hose fitting, away from the coupling body, and with the short side facing the coupling body.

The first end of the hose fitting away from the coupling body is sometimes tapered to facilitate insertion into the end of the hose. In some cases, for the same reason, the entire outside surface of the hose fitting is slightly tapered (its diameter increasing from the first end of the hose fitting towards the coupling body).

The clamping means may be embodied by a plain metal clip tightened around the end of the hose itself. Alternatively, in some types of quick-disconnect couplings, the clamping means comprise hose compression means (for example, flexible teeth located around the hose fitting, or similar systems) which are tightened on the hose by means of a ring nut that screws onto the body of the coupling. The ring nut has a through hole into which the hose can be inserted. Before connecting the hose to the fitting, the ring nut is unscrewed completely, separated from the coupling body and slipped over the hose. After pressing the end of the hose onto the hose fitting, the ring nut is screwed onto the body of the coupling again. As it is screwed onto the coupling body, the ring nut moves along the common axis of the hose fitting and hose and, thanks to a specially shaped inside surface, forces the compression means to press down on the outside surface of the hose. In some cases, the coupling body comprises a tubular protuberance which extends for a certain length around the hose fitting and forms, in conjunction with the latter's outside surface, a seat into which at least a part of the hose end can be inserted. The threading for engaging the ring nut with the coupling body is usually formed on the outside surface of the tubular protuberance. Also, the compression means may be located either in front of the tubular protuberance towards the first end of the hose fitting (and, if necessary, integral with the end of the tubular protuberance) or between the tubular protuberance and the outside surface of the hose fitting.

Spiral corrugated hose couplings of this kind are not free of disadvantages.

In particular, once the hose has been connected to the hose fitting, it is difficult to remove it. The clip is easily slackened. The ring nut is also easy to unscrew, after which it can slide freely along the outside surface of the hose, away from the hose fitting. After slackening the clip or moving the ring nut away, however, the end of the hose remains in place and must be forced off by hand. There is, however, considerable friction between the outside surface of the hose fitting (especially if it has annular barbs) and the inside surface of the hose. The pulling force exerted along the axis of the hose in the attempt to pull it off the hose fitting stretches the hose and tends to reduce its diameter. The hose is thus tightened around the hose fitting even more and it is very difficult to pull it off on account of the friction. This kind of phenomenon is especially marked in the case of spiral corrugated hoses owing to their particular characteristics. Moreover, in the case of spiral corrugated hoses, the tightening effect is accentuated if the hose is also twisted as well as pulled in an attempt to "unscrew" the hose from the hose fitting (if the twisting action causes the hose to turn in the same direction as the spiral corrugations). It is not possible to facilitate removal of the spiral corrugated hose from the coupling without at least partially reducing the effectiveness of the fluid seal and/or mechanical tightness of the coupling.

Moreover, pressing the hose onto the fitting may also be a difficult and laborious task.

Document FR-A1-2 258 533 discloses a coupling for spiral corrugated hoses according to the preamble of claim 1, comprising a tubular supporting element which has a conical tip to facilitate the insertion of the hose on the supporting element. A nut is located coaxially and externally with respect to the supporting element and constrained in such a way that rotation of the nut around the common axis is allowed, while translation of the nut along the axis is impeded. The inside surface of the nut has a spiral ridge which cooperates with the ridge on the outside surface of the corrugated hose. At the end of the space between the nut and the supporting clement, which is located far from the tip of the supporting element itself, a sealing ring is housed in a related seat. Rotation of the nut draws the hose on the supporting element in the space between the nut and the supporting clement, until the end of the hose is pushed against the sealing ring. Axial compression of both the sealing ring and the hose occurs, which ensures a fluid seal by, on one end, compressing the sealing ring so that it fills the related seat and, on the other hand, by causing, via further rotation of the nut, a further axial compression of the hose, which makes the ridges on the outside surface of the hose be compressed against the ridges of the inside surface of the nut, so that the gaps between consecutive ridges on the inside surface of the hose are nearly filled.

The present invention therefore has for an aim to overcome the above mentioned disadvantages by providing a coupling for spiral corrugated hoses that is quick and easy to fit and just as easy to remove without affecting the mechanical tightness and fluid seal of the coupling when it is in place.

These and other aims, which will become more apparent in the description which follows, are achieved in accordance with the invention by a coupling for spiral corrugated hoses having the structural and functional characteristics according to claim 1, while other embodiments of the apparatus according to the invention are described in the dependent claims.

The invention will now be described in more detail with reference to the accompanying drawings, listed below, which illustrate a non-limiting preferred embodiment of it.
- Figure 1 is a side view showing the coupling according to the invention and a spiral corrugated hose just before the latter is connected to the coupling. Both the coupling and the hose are shown in a coaxial position and half sectioned.
- Figure 2 is another side view, similar to that of Figure 1, showing the coupling according to the invention with the hose placed over the supporting element that defines the hose fitting. Two details of the drawing are highlighted by circles.
- Figure 3 shows the detail in the circle on the left in Figure 2.
- Figure 4 shows the detail in the circle on the right in Figure 2.
- Figure 5 is a detail from Figure 1, showing the annular barbs on the outside surface of the supporting element that defines the hose fitting.
- Figure 6 is an enlarged view of the detail of Figure 5.

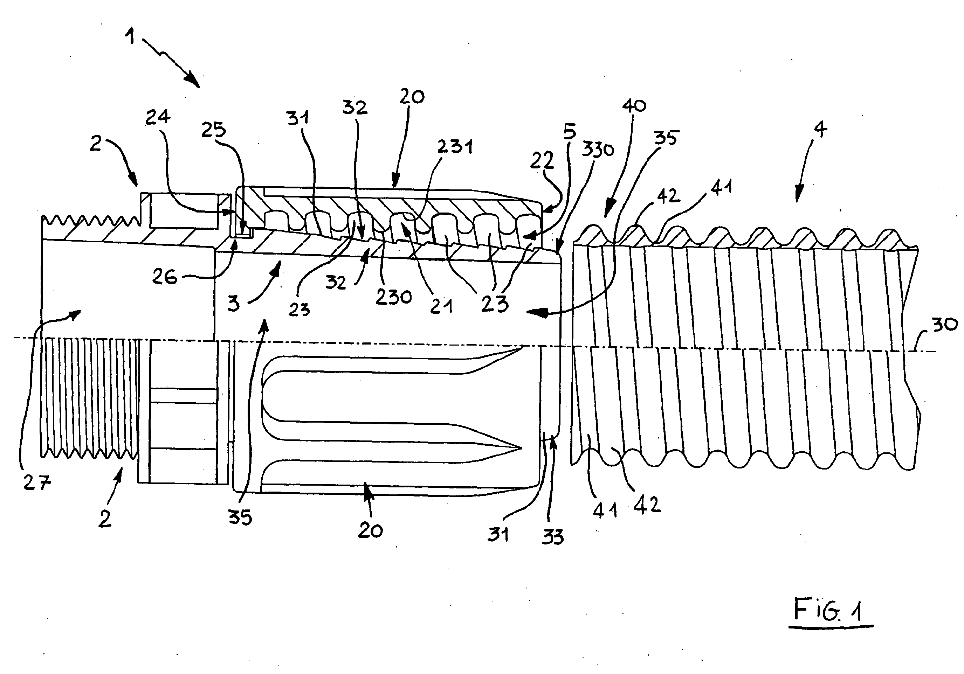

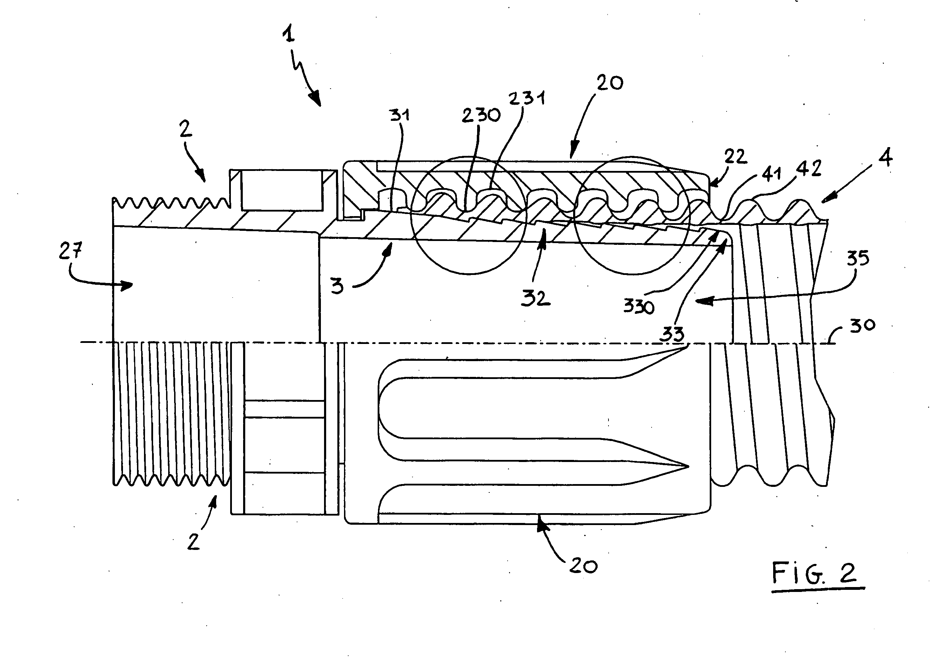

With reference to the drawings, in particular Figures 1 and 2, the numeral 1 denotes a coupling for spiral corrugated hoses. The coupling 1 for spiral corrugated hoses comprises a coupling body 2, a supporting element 3, and a tubular protuberance 20 of the coupling body 2.

The supporting element 3 is symmetrical about its axis of extension 30 and is fixed to the coupling body 2 in such a way that it projects from the latter. In particular, it may advantageously be made as a single part with the coupling body 2.

The supporting element 3 is designed to receive on its outside surface 31 one end 40 of a spiral corrugated hose 4.

The supporting element 3 thus defines the hose fitting of the coupling 1. The supporting element 3 may be a tubular element having a through hole 35 that can communicate with a corresponding through hole 27 made in the coupling body 2. The through holes 35, 27 may have fluids (liquids or gases) conveyed by the hose 4 flowing through them (if the hose 4 is used for carrying fluids) or electric lines, signal transmission lines, waveguides, optical fibres and the like passing through them (if the hose 4 is used for this type of application). If the hose 4 is used to cover electric lines, signal transmission lines, waveguides, optical fibres and the like, the supporting element 3 might also be a connector for the lines themselves.

The tubular protuberance 20 of the coupling body 2 is radially outside and coaxial with the supporting element 3. The tubular protuberance 20 forms with the outside surface 31 of the supporting element 3, a receiving seat 5 for at least part of the end 40 of the hose 4.

The outside surface 31 of the supporting element 3 has at least one truncated cone shaped section 32 whose diameter increases along the axis 30 towards the coupling body 2 and which is designed to enlarge the diameter of the portion of the hose 4 fitted over it.

In the coupling 1, the fluid seal is provided mainly by this truncated cone shaped section 32.

The tubular protuberance 20 is in a fixed position along the axis 30 relative to the coupling body 2 and supporting element 3 but is free to turn about the axis 30 relative to the coupling body 2 and supporting element 3.

Thus, during rotational motion of the tubular protuberance 20 about the axis 30, translational motion of the tubular protuberance 20 along the axis 30 is not possible. This is achieved as illustrated in Figures 1 and 2, for example. More specifically, an end edge 24 of the tubular protuberance 20 facing the coupling body 2 may have a circular protrusion 25 and the latter may be housed in a circular groove 26 made in the coupling body 2. The connection between the circular protrusion 25 and the circular groove 26 may also be obtained by means of ball bearings or the like. Other type of connection between the tubular protuberance 20 and the coupling body 2 or the supporting element 3 are imaginable provided they allow the tubular protuberance 20 to turn freely about the axis 30 while at the same time preventing the tubular protuberance 20 from moving lengthways along the axis 30.

Further, the tubular protuberance 20 covers the truncated cone shaped section 32 at least up to a predetermined distance from the end of the truncated cone shaped section 32 which is located at the opposite side of the truncated cone shaped section 32 with respect to the coupling body 2.

The inside surface 21 of the tubular protuberance 20 has a spiral groove 23 of predetermined pitch along the axis 30 and covering the truncated cone shaped section 32 for a predetermined length along the axis 30. The spiral groove 23 is designed to interact with the outside surface of the spiral corrugated hose 4. In particular, it is used as a female thread that engages the outside surface of the spiral corrugated hose 4 (and, more specifically, the spiral ridges 42 on the outside surface of the hose 4).

Turning the tubular protuberance 20 in one direction about the axis 30 draws the hose 4 over the truncated cone shaped section 32 towards the coupling body 2 by screwing the tubular protuberance 20 on the hose 4. This widens the diameter of the hose 4 and pre-stretches the hose 4 in at least a part of the truncated cone shaped section 32, thus creating a fluid seal from the inside out and vice versa.

Turning the tubular protuberance 20 in the opposite direction about the axis 30 drives the hose 4 over the truncated cone shaped section 32 away from the coupling body 2 by unscrewing it from the hose 4.

The presence of the spiral groove 23 creates alternate ridges 230 and grooves 231 along the axis 30 on the inside surface 21 of the tubular protuberance 20. Both the ridges 230 and the grooves 231 on the inside surface 21 of the tubular protuberance 20 extend in spiral fashion along the axis 30.

Once it has been placed over the supporting element 3 as far as the point where the spiral groove 23 starts, the end 40 of the hose 4 engages the end of the spiral groove 23 furthest away from the coupling body 2 along the axis 30. At this point, the tubular protuberance 20 can be turned in such a way as to screw it onto the hose 4. Since the position of the protuberance 20 on the axis 30 is fixed, turning the tubular protuberance 20 about the axis 30 has the effect of advancing the end 40 of the hose 4 towards the coupling body along the outside surface 31 of the supporting element 3.

At this stage, the ridges 230 on the inside surface 21 of the tubular protuberance 20 are designed to interact with grooves 41 on the outside surface of the hose 4, while the grooves 231 on the inside surface 21 of the tubular protuberance 20 are designed to interact with ridges 42 on the outside surface of the hose 4 (see Figures 2, 3 and 4, in particular).

In the portion of the truncated cone shaped section 32 covered by the spiral groove 23, the portion of hose 4 fitted therein is forcefully widened in diameter, with the result that the portion of hose 4 tends to contract along the axis 30. However, the action of the ridges 230 and grooves 231 on the inside surface 21 of the tubular protuberance 20 prevents the hose 4 from contracting and squeezes it against the truncated cone shaped section 32 of the outside surface 31. This pre-stretches the portion of hose 4 fitted over the truncated cone shaped section 32, thus creating on at least a part of the latter a fluid seal preventing fluids (liquids and/or gases) from entering and escaping from the hose. The prestretched state depends on the taper of the truncated con shaped section 32 and/or on its length. The truncated cone shaped section 32 may therefore be shaped in such a way as to enable the pre-stretching level of the hose 4 to be calibrated according to operating pressure.

The tubular protuberance 20 may be turned by hand or using a tool. The extent to which the end 40 of the hose 4 is pulled over the coupling 1 and, more specifically, how far it is advanced on the truncated cone shaped section 32 (and hence the pre-stretching of the hose 4) can thus be easily and precisely calibrated as required.

The interference between the spiral groove 23 and the outside surface of the spiral corrugated hose 4 also helps maintain the mechanical tightness of the coupling 1 and prevents the hose 4 from being accidentally pulled off the coupling 1.

By simply turning the tubular protuberance 20 in the opposite direction causes the hose 4 to be retracted and to slide off the truncated cone shaped section 32. Once it has returned to the point where the spiral groove 23 starts, the end 40 of the hose 4 can be disengaged from the end of the spiral groove 23 on the side opposite the coupling body 2 along the axis 30 and the hose 4 can be easily extracted.

Turning the tubular protuberance 20 only causes the hose 4 to move along the axis 30, without turning about its axis, thus avoiding all the negative effects that would result from twisting the hose about its axis.

In the section between one end portion 33 of the supporting element 3 and the point along the axis 30 where the spiral groove 23 starts, the outside surface 31 of the supporting element 3 is advantageously shaped in such a way that the hose 4 can be fitted over it without applying any such force as would make it difficult to remove at a later stage. Obviously, the receiving seat 5 is also shaped according to the same criterion in the area corresponding to the section of the outside surface 31 of the supporting element 3 between the end portion 33 of the supporting element 3 and the point along the axis 30 where the spiral groove 23 starts.

Advantageously, the spiral groove 23 covers the whole of the truncated cone shaped section 32 covered by the tubular protuberance 20. Thus, the pre-stretching effect of the hose 4 can be maximized without altering the taper and length of the truncated cone shaped section 32.

In a preferred embodiment of the invention, the tubular protuberance 20 covers the whole of the truncated cone shaped section 32 except not more than an end portion 330 of it. The tubular protuberance 20 may cover the whole of the supporting element 3 except not more than the end portion 33 of it. Further, according to the invention, the truncated cone shaped section 32 extends over the entire outside surface 31 of the supporting element 3. In this case, the end portion 330 of the truncated cone shaped section 32 coincides with the end portion 33 of the supporting element 3. Advantageously, the spiral groove 23 extends along the axis 30 towards the coupling body 2 starting from one end 22 of the tubular protuberance 20 away from the coupling body 2.

According to the invention, the truncated cone shaped section 32 extends over the entire outside surface 31 of the supporting element 3. In the preferred embodiment according to the drawings, the tubular protuberance 20 covers the whole of the supporting element 3 except not more than the end portion 33 of it; the spiral groove 23 covers the whole of the truncated cone shaped section 32 covered by the tubular protuberance 20, extending along the axis 30 towards the coupling body 2 starting from the end 22 of the tubular protuberance 20 away from the coupling body 2. This embodiment maximizes coupling efficiency in the minimum of space. The hose 4 needs only be rested on the end portion 33 of the supporting element 3 to engage the end 40 of the hose 4 with the end of the spiral groove 23 located furthest from the coupling body 2 along the axis 30.

Advantageously, at least at the truncated cone shaped section 32, the receiving seat 5 gets narrower along the axis 30 towards the coupling body 2.

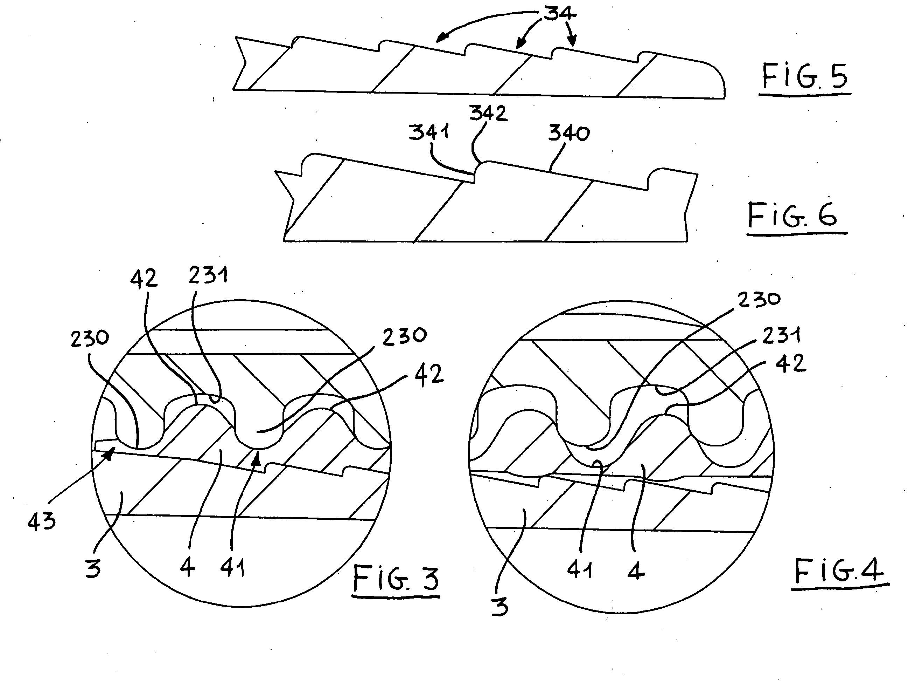

Thus, as the end 40 of the hose 4 advances along the axis 30 on the truncated cone shaped section 32, widening its diameter, the ridges 230 on the inside surface 21 of the tubular protuberance 20 penetrate deeper into the grooves 41 on the outside surface of the hose 4. At a certain point, at least one or more of the ridges 230 on the inside surface 21 acting at least on the endmost part of the end 40 of the hose 4 press the hose 4 sections between two consecutive ridges 42 against the outside surface 31 of the supporting element 3 (see details of Figures 3 and 4). If an end section 43 of the outside surface of the hose 4 corresponds to a groove 41 portion of the outside surface of the hose 4 preceding the first ridge 42 on the outside surface of the hose 4, a ridge 230 on the inside surface 21 of the tubular protuberance 20 also presses this end section 43 of the outside surface of the hose 4. As is known, in the sections corresponding to grooves 41 or groove 41 portions of the outside surface of the hose 4, the hose 4 is "softer" than it is at the ridges 42 and may be more easily compressed and deformed against the surface of the supporting element 3. Thus, the effectiveness of the seal is further enhanced by the compression.

According to the invention, the truncated cone shaped section 32 extends over the entire outside surface 31 of the supporting element 3. In the preferred embodiment of the invention illustrated in the accompanying drawings: the tubular protuberance 20 covers the whole of the supporting element 3 except not more than the end portion 33 of it; the spiral groove 23 covers the whole of the truncated cone shaped section 32 covered by the tubular protuberance 20, extending along the axis 30 towards the coupling body 2 starting from the end 22 of the tubular protuberance 20 away from the coupling body 2. Advantageously, in this embodiment, the whole of the receiving seat 5 gets narrower along the axis 30 towards the coupling body 2 .

In the preferred embodiment illustrated in the drawings, the inside surface 21 of the tubular protuberance 20 is cylindrical.

It might, however, be shaped differently, provided always that it at least enables the hose 4 to be drawn over the truncated cone shaped section 32 in such a way as to widen the hose diameter and to pre-stretch the portion of the hose 4 located on the at least one portion of the truncated cone shaped section 32 designed for this purpose. If the receiving seat 5 gets narrower, at least at the truncated cone shaped section 32, along the axis 30 towards the coupling body 2, the shape of the inside surface 21 of the tubular protuberance 20 must be such as to guarantee that the hose 4 is pressed against the supporting element by at least one or more of the ridges 230 on the inside surface 21 of the tubular protuberance 20 acting at least on the endmost part of the end 40 of the hose 4.

In particular, the inside surface 21 of the tubular protuberance 20 might also be shaped like a truncated cone, decreasing in diameter along the axis 30 towards the coupling body 2.

Advantageously, shaped annular barbs 34 are provided at least on the truncated cone shaped section 32 of the outside surface 31 of the supporting element 3. The annular barbs 34 are suitably closed. The annular barbs 34 penetrate the walls of the hose 4 as the latter is drawn over the truncated cone shaped section 32 by turning the tubular protuberance 20, thus further increasing the mechanical tightness and fluid seal of the coupling. Each closed annular barb 34 causes the outside surface 31 of the supporting element 3 to come into contact with the inside surface of the hose 4 at least in the form of a closed curve centred on the axis 30. This contact is also maintained by the constraint against the axial contractions of the hose 4 constituted by the ridges 230 on the inside surface 21 of the tubular protuberance which engage corresponding grooves 41 of the outside surface of the spiral corrugated hose 4.

Advantageously (see Figures 5 and 6) the barbs 34 have no sharp edges. This makes it easier not only to fit the hose 4 over the supporting element 3 but also to remove it by turning the tubular protuberance 20.

In the preferred embodiment illustrated in the drawings, the annular barbs 34 viewed in cross section in any plane containing the axis 30 are sawtooth shaped, with an oblique long side 340 facing away from the coupling body 2 and a short side 341 facing the coupling body 2, the short side 341 and the long side 340 being connected by a rounded section 342. This shape maximizes the fluid seal of the coupling 1 while at the same time allowing the coupling 1 to be easily removed from the hose 4 when the tubular protuberance 20 is turned.

The spiral groove 23 may also have a variable pitch along the axis 30.

The main function of the tubular protuberance 20 is to drive the hose 4. It also counteracts the axial contractions of the hose 4 since it can turn freely about the axis 30 but without moving lengthways along it and thanks to the fact that the spiral groove 23 engages the outside surface of the spiral corrugated hose 4. In this way, it also cooperates in pre-stretching the hose (4) on the truncated cone shaped section 32, thus improving the fluid seal. If there is a receiving seat 5 having at least a section that gets narrower along the axis 30 towards the coupling body 2, the tubular protuberance 20 also cooperates in providing the fluid seal by pressing one or more of the ridges 230 on its inside surface 21 against the hose 4 portions corresponding to the respective grooves 41. The engagement of the spiral groove 23 with the outside surface of the spiral corrugated hose 4 helps prevent the hose 4 from being accidentally pulled off the coupling 1.

The taper of the supporting element 3 (the truncated cone shaped section 32 of the outside surface 31) guarantees the fluid seal by widening the diameter of the hose 4 and by pre-stretching it. As mentioned above, the pre-stretching effect is also obtained in conjunction with the spiral groove 23.

The annular barbs 34 improve both the fluid seal and the mechanical tightness of the coupling 1 (in particular, preventing the hose 4 from being accidentally pulled off) and, if their edges are rounded, they enable the hose 4 to be drawn easily over the truncated cone shaped section 32 under the action of the tubular protuberance 20.

The invention achieves important advantages.

The couplings made according to the invention offer very good mechanical tightness and provide an excellent fluid seal for the permitted uses, combined with extreme ease of hose assembly and disassembly, as well as a high level of versatility. In particular, in the couplings according to the invention, the mechanical tightness and fluid seal can be precisely calibrated by turning the tubular protuberance.

## Claims

1. A coupling (1) for spiral corrugated hoses, comprising:
- a coupling body (2);
- a supporting element (3) symmetrical about its axis of extension (30), fixed to, and projecting from, the coupling body (2) and designed to receive on its outside surface (31) one end (40) of a spiral corrugated hose (4);
- a tubular protuberance (20) of the coupling body (2), radially outside and coaxial with the supporting element (3) and forming with the outside surface (31) of the supporting element (3) a receiving seat (5) for at least part of the end (40) of the hose (4);
wherein:
- the outside surface (31) of the supporting element (3) has at least one truncated cone shaped section (32) whose diameter increases along the axis (30) towards the coupling body (2) and which is designed to enlarge the diameter of the portion of the hose (4) fitted over it;
- the tubular protuberance (20) is in a fixed position along the axis (30) relative to the coupling body (2) and supporting element (3), is free to turn about the axis (30) relative to the coupling body (2) and supporting element (3) and covers the truncated cone shaped section (32) at least up to a predetermined distance from the end of the truncated cone shaped section (32) which is located at the opposite side of the truncated cone shaped section (32) with respect to the coupling body (2);
- the inside surface (21) of the tubular protuberance (20) has a spiral groove (23) of predetermined pitch along the axis (30), covering the truncated cone shaped section (32) for a predetermined length along the axis (30) and being designed to interact with the outside surface of the spiral corrugated hose (4) as a female thread that engages the outside surface of the spiral corrugated hose (4), the presence of the spiral groove (23) creating alternate ridges (230) and grooves (231) along the axis (30) on the inside surface (21) of the tubular protuberance (20), the ridges (230) on the inside surface (21) of the tubular protuberance (20) being designed to interact with grooves (41) on the outside surface of the hose (4), the grooves (231) on the inside surface (21) of the tubular protuberance (20) being designed to interact with ridges (42) on the outside surface of the hose (4); so that:
- turning the tubular protuberance (20) in one direction about the axis (30) causes the hose (4) to be drawn over the truncated cone shaped section (32) towards the coupling body (2) by screwing the tubular protuberance (20) on the hose (4), the portion of hose (4) fitted in the portion of the truncated cone shaped section (32) covered by the spiral groove (23) being forcefully widened in diameter and tending to contract along the axis (30), the action of the ridges (230) and grooves (231) on the inside surface (21) of the tubular protuberance (20) preventing the axial contraction of the hose (4) and squeezing the hose (4) against the truncated cone shaped section (32) of the outside surface (31), thus widening the diameter of the hose (4) and pre-stretching the hose (4) in at least a part of the truncated cone shaped section (32) and creating a fluid seal from the inside out and vice versa;
- turning the tubular protuberance (20) about the axis (30) in the opposite direction causes the hose (4) to be driven over the truncated cone shaped section (32) away from the coupling body (2) by unscrewing the tubular protuberance (20) from the hose (4);
**characterised in that**:
the truncated cone shaped section (32) extends over the entire outside surface (31) of the supporting element (3).

2. The coupling (1) according to claim 1, **characterised in that** the spiral groove (23) covers the whole of the truncated cone shaped section (32) covered by the tubular protuberance (20)

3. The coupling (1) according to claim 1 or 2, **characterised in that** the spiral groove (23) extends along the axis (30) towards the coupling body (2) starting from one end (22) of the tubular protuberance (20) away from the coupling body (2).

4. The coupling (1) according to any of the foregoing claims, **characterised in that** the tubular protuberance (20) covers the whole of the truncated cone shaped section (32) except not more than an end portion (33) of it.

5. The coupling (1) according to claim 4, **characterised in that** the tubular protuberance (20) covers the whole of the supporting element (3) except not more than an end portion (33) of it.

6. The coupling (1) according to any of the foregoing claims, **characterised in that** the receiving seat (5) gets narrower along the axis (30) towards the coupling body (2) at least at the truncated cone shaped section (32).

7. The coupling (1) according to claim 6, **characterised in that** the inside surface (21) of the tubular protuberance (20) is cylindrical.

8. The coupling (1) according to claim 6, **characterised in that** the inside surface (21) of the tubular protuberance (20) is shaped like a truncated cone decreasing in diameter along the axis (30) towards the coupling body (2).

9. The coupling (1) according to any of the foregoing claims, **characterised in that** shaped annular barbs (34) are provided at least on the truncated cone shaped section (32) of the outside surface (31) of the supporting element (3).

10. The coupling (1) according to claim 9, **characterised in that** the annular barbs (34) are closed.

11. The coupling (1) according to claim 9 or 10, **characterised in that** the annular barbs (34) do not have sharp edges.

12. The coupling (1) according to claim 11, **characterised in that** in cross section in any plane containing the axis (30) the annular barbs (34) are sawtooth shaped, with an oblique long side (340) facing away from the coupling body (2) and a short side. (341) facing the coupling body (2), the short side (341) and the long side (340) being connected by a rounded section (342).

13. The coupling (1) according to any of the foregoing claims, **characterised in that** the spiral groove (23) has a variable pitch along the axis (30).

## Patentansprüche

1. Verbindung (1) für Spiralwellschläuche, enthaltend:
- einen Verbindungskörper (2);
- ein Halteelement (3), symmetrisch um die eigene Ausdehnungsachse (30), befestigt an dem Verbindungskörper (2) und von diesem hervorstehend und dazu bestimmt, auf seiner äusseren Oberfläche (31) ein Ende (40) eines Spiralwellschlauches (4) aufzunehmen;
- einen rohrförmigen Vorsprung (20) des Verbindungskörpers (2), radial aussen und koaxial zu dem Halteelement (3) und zusammen mit der äusseren Oberfläche (31) des Halteelementes (3) einen Aufnahmesitz (5) für wenigstens einen Teil des Endes (40) von dem Schlauch (4) bildend; bei welcher:
- die äussere Oberfläche (31) des Halteelementes (3) wenigstens einen stumpfkegelförmigen Abschnitt (32) aufweist, dessen Durchmesser entlang der Achse (30) in Richtung des Verbindungskörpers (2) zunimmt, und welcher dazu bestimmt ist, den Durchmesser des auf ihm befestigten Abschnittes des Schlauches zu erweitern;
- sich der ringförmige Vorsprung (20) in einer festen Position entlang der Achse (30) im Verhältnis zu dem Verbindungskörper (2) und dem Halteelement (3) befindet und den stumpfkegelförmigen Abschnitt (32) wenigstens bis zu einem bestimmten Abstand von dem Ende des stumpfkegelförmigen Abschnittes (32) überdeckt, das sich im Verhältnis zu dem Verbindungskörper (2) auf der entgegengesetzten Seite des stumpfkegelförmigen Abschnittes (32) befindet;
- die Innenfläche (21) des rohrförmigen Vorsprungs (20 eine spiralförmige Rille (23) mit eine vorgegebenen Steigung entlang der Achse (30) hat, welche für eine bestimmte Länge entlang der Achse (30) den stumpfkegelförmigen Abschnitt (32) abdeckt und dazu bestimmt ist, mit der äusseren Oberfläche des Spiralwellschlauches (4) als ein Aufnahmegewinde zusammenzuwirken, das über die äussere Oberfläche des Spiralwellschlauches (4) greift, wobei das Vorhandensein der spiralförmigen Rille (23) abwechselnd Rippen (230) und Rillen (231) entlang der Achse (30) an der Innenfläche (21) des ringförmigen Vorsprungs (20) erzeugt, wobei die Rippen (230) an der Innenfläche (21) des ringförmigen Vorsprungs (20) dazu bestimmt sind, mit den Rillen (41) an der äusseren Oberfläche des Schlauches (4) zusammenzuwirken, und wobei die Rillen (231) an der Innenfläche (21) des ringförmigen Vorsprungs (20) dazu bestimmt sind, mit den Rippen (42) an der äusseren Oberfläche des Schlauches (4) zusammenzuwirken; so dass:
- das Drehen des rohrförmigen Vorsprungs (20) in einer Richtung um die Achse (30) bewirkt, dass der Schlauch (4) über den stumpfkegelförmigen Abschnitt (32) in Richtung des Verbindungskörpers (2) gezogen wird, und zwar durch Aufschrauben des rohrförmigen Vorsprungs (20) auf den Schlauch (4), wobei der Abschnitt des Schlauches (4), befestigt in dem Teil des stumpfkegelförmigen Abschnitts (32), der durch die spiralförmige Rille (23) abgedeckt ist, kräftig im Durchmesser aufgeweitet wird und dazu neigt, sich entlang der Achse (30) zusammenzuziehen, wobei die Wirkung der Rippen (230) und Rillen (231) an der Innenfläche (21) des ringförmigen Vorsprungs (20) das axiale Zusammenziehen des Schlauches (4) verhindern und den Schlauch (4) gegen den stumpfkegelförmigen Abschnitt (32) der äusseren Oberfläche (31) quetschen, folglich den Durchmesser des Schlauches (4) aufweiten und den Schlauch (4) an wenigstens einem Teil des stumpfkegelförmigen Abschnittes (32) vordehnen, sodass eine Strömungsdichtung von innen nach aussen und umgekehrt hergestellt wird;
- das Drehen des ringförmigen Vorsprungs (20) um die Achse (30) in der entgegengesetzten Richtung bewirkt, dass der Schlauch (4) über den stumpfkegelförmigen Abschnitt (32) von dem Verbindungskörper (2) fort gezogen wird, und zwar durch Abschrauben des ringförmigen Vorsprungs (20) von dem Schlauch;
**dadurch gekennzeichnet, dass**
sich der stumpfkegelförmige Abschnitt (32) über die gesamte äussere Oberfläche (31) des Halteelementes (3) erstreckt.

2. Verbindung (1) nach Patentanspruch 1, **dadurch gekennzeichnet, dass** die spiralförmige Rille (23) den gesamten Bereich des stumpfkegelförmigen Abschnittes (32) abdeckt, der durch den ringförmigen Vorsprung (20) abgedeckt ist.

3. Verbindung (1) nach Patentanspruch 1 oder 2, **dadurch gekennzeichnet, dass** die spiralförmige Rille (23) sich entlang der Achse (30) zu dem Verbindungskörper (2) hin erstreckt, ausgehend von einem von dem Verbindungskörper (2) entfernt liegenden Ende (22) des ringförmigen Vorsprungs (20).

4. Verbindung (1) nach einem jeden der vorstehenden Patentansprüche, **dadurch gekennzeichnet, dass** der ringförmige Vorsprung (20) den gesamten Bereich des stumpfkegelförmigen Abschnittes (32) abdeckt, mit Ausnahme von nicht mehr als einem Endabschnitt (33) desselben.

5. Verbindung (1) nach Patentanspruch 4, **dadurch gekennzeichnet, dass** der rohrförmige Vorsprung (20) den gesamten Bereich des Halteelementes (3) abdeckt, mit Ausnahme von nicht mehr als einem Endabschnitt (33) desselben.

6. Verbindung (1) nach einem jeden der vorstehenden Patentansprüche, **dadurch gekennzeichnet, dass** der Aufnahmesitz (5) wenigstens an dem stumpfkegelförmigen Abschnitt (32) entlang der Achse (30) zu dem Verbindungskörper (2) hin schmaler wird.

7. Verbindung (1) nach Patentanspruch 6, **dadurch gekennzeichnet, dass** die Innenfläche (21) des ringförmigen Vorsprungs (20) zylindrisch ist.

8. Verbindung (1) nach Patentanspruch 6, **dadurch gekennzeichnet, dass** die Innenfläche (21) des ringförmigen Vorsprungs (20) als Stumpfkegel geformt ist, der im Durchmesser entlang der Achse (30) zu dem Verbindungskörper (2) hin abnimmt.

9. Verbindung (1) nach einem jeden der vorstehenden Patentansprüche, **dadurch gekennzeichnet, dass** geformte ringförmige Ansätze (34) vorgesehen sind, und zwar wenigstens an dem stumpfkegelförmigen Abschnitt (32) der äusseren Oberfläche (31) des Halteelementes (3).

10. Verbindung (1) nach Patentanspruch 9, **dadurch gekennzeichnet, dass** die ringförmigen Ansätze (34) geschlossen sind.

11. Verbindung (1) nach Patentanspruch 9 oder 10, **dadurch gekennzeichnet, dass** die ringförmigen Ansätze (34) keine scharfen Kanten haben.

12. Verbindung (1) nach Patentanspruch 11, **dadurch gekennzeichnet, dass** im Querschnitt in jeder die Achse (30) enthaltenden Ebene die ringförmigen Ansätze (34) sägezahnförmig sind, mit einer schrägen langen Seite (340), die von dem Verbindungskörper (2) fort gerichtet ist, und einer kurzen Seite (341), die dem Verbindungskörper (2) zugewandt ist, wobei die lange Seite (340) und die kurze Seite (341) durch einen abgerundeten Abschnitt (342) miteinander verbunden sind.

13. Verbindung nach einem jeden der vorstehenden Patentansprüche, **dadurch gekennzeichnet, dass** die spiralförmige Rille (23) entlang der Achse (30) eine veränderbare Steigung hat.

## Revendications

1. Raccord (1) pour des flexibles ondulés en spirales, comprenant:
- un corps (2) de raccord;
- un élément de support (3) symétrique autour de son axe de développement (30), fixé de manière saillante sur le corps de raccord (2) et conçu pour recevoir sur sa surface externe (31) une extrémité (40) d'un flexible ondulé en spirales (4);
- une protubérance tubulaire (20) du corps de raccord (2), radialement externe et coaxiale à l'élément de support (3) et formant avec la surface externe (31) de l'élément de support (3) un logement d'insertion (5) pour au moins une partie de l'extrémité (40) du flexible (4);
dans lequel:
- la surface externe (31) de l'élément de support (3) présente au moins une section en forme de tronc de cône (32) dont le diamètre augmente le long de l'axe (30) vers le corps de raccord (2) et qui est conçue pour élargir le diamètre de la partie du flexible (4) qui est enfilée sur elle;
- la protubérance tubulaire (20) se trouve dans une position fixe le long de l'axe (30) par rapport au corps de raccord (2) et à l'élément de support (3), est libre de pivoter autour de l'axe (30) par rapport au corps de raccord (2) et à l'élément de support (3), et couvre la section en forme de tronc de cône (32) au moins jusqu'à une distance prédéterminée de l'extrémité de la section en forme de tronc de cône (32) qui est située en correspondance du côté opposé de la section en forme de tronc de cône (32) par rapport au corps de raccord (2);
- la surface intérieure (21) de la protubérance tubulaire (20) présente une rainure en spirale (23) ayant un pas prédéterminé le long de l'axe (30), couvrant la section en forme de tronc de cône (32) sur une longueur prédéterminée le long de l'axe (30), et étant conçue pour interagir avec la surface externe du flexible ondulé en spirales (4) comme un filetage femelle qui engage la surface externe du flexible ondulé en spirales (4), la présence de la rainure en spirale (23) créant alternativement des nervures (230) et des rainures (231) le long de l'axe (30) sur la surface interne (21) de la protubérance tubulaire (20), les nervures (230) sur la surface interne (21) de la protubérance tubulaire (20) étant conçues pour interagir avec des rainures (41) sur la surface externe du flexible (4), les rainures (231) sur la surface interne (21) de la protubérance tubulaire (20) étant conçues pour interagir avec les nervures (42) sur la surface externe du flexible (4); de telle manière que:
- une rotation de la protubérance tubulaire (20) dans une direction autour de l'axe (30) cause l'entrainement du flexible (4) sur la section en forme de tronc de cône (32) vers le corps de raccord (2) par vissage de la protubérance tubulaire (20) sur le flexible (4), la portion de flexible (4) enfilée dans la partie de la section en forme de tronc de cône (32) couverte par la rainure en spirale (23) étant en force élargie sur son diamètre et tendant à se contracter le long de l'axe (30), l'action des nervures (230) et des rainures (231) sur la surface interne (21) de la protubérance tubulaire (20) prévenant la contraction axiale du flexible (4) et comprimant le flexible (4) contre la section en forme de tronc de cône (32) de la surface externe (31), en élargissant ainsi le diamètre du flexible (4) et prétensionnant le flexible (4) sur au moins une partie de la section en forme de tronc de cône (32) et créant une étanchéité de l'intérieur vers l'extérieur et vice versa;
- une rotation de la protubérance tubulaire (20) autour de l'axe (30) dans la direction opposée cause un entrainement du flexible (4) hors de la section en forme de tronc de cône (32) en éloignement du corps de raccord (2) par dévissage de la protubérance tubulaire (20) du flexible (4);
**caractérisé en ce que** la section en forme de tronc de cône (32) s'étend sur toute la surface externe (31) de l'élément de support (3).

2. Raccord (1) selon la revendication 1, **caractérisé en ce que** la rainure en spirale (23) couvre toute la section en forme de tronc de cône (32) couverte par la protubérance tubulaire (20).

3. Raccord (1) selon la revendication 1 ou 2, **caractérisé en ce que** la rainure en spirale (23) s'étend le long de l'axe (30) vers le corps de raccord (2) à partir d'une extrémité (22) de la protubérance tubulaire (20) en éloignement du corps de raccord (2).

4. Raccord (1) selon l'une quelconque des revendications précédentes, **caractérisé en ce que** la protubérance tubulaire (20) couvre toute la section en forme de tronc de cône (32) à l'exception d'au plus une partie d'extrémité (33) de cette dernière.

5. Raccord (1) selon la revendication 4, **caractérisé en ce que** la protubérance tubulaire (20) couvre tout l'élément de support (3) à l'exception d'au plus une partie d'extrémité (33) de ce dernier.

6. Raccord (1) selon l'une quelconque des revendications précédentes, **caractérisé en ce que** le logement d'insertion (5) se rétrécit le long de l'axe (30) vers le corps de raccord (2) au moins en correspondance de la section en forme de tronc de cône (32).

7. Raccord (1) selon la revendication 6, **caractérisé en ce que** la surface intérieure (21) de la protubérance tubulaire (20) est cylindrique.

8. Raccord (1) selon la revendication 6, **caractérisé en ce que** la surface intérieure (21) de la protubérance tubulaire (20) a la forme d'un tronc de cône dont le diamètre décroit le long de l'axe (30) vers le corps de raccord (2).

9. Raccord (1) selon l'une quelconque des revendications précédentes, **caractérisé en ce que** des reliefs annulaires (34) sont prévus au moins sur la section en forme de tronc de cône (32) de la surface externe (31) de l'élément de support (3).

10. Raccord (1) selon la revendication 9, **caractérisé en ce que** les reliefs annulaires (34) sont fermés.

11. Raccord (1) selon la revendication 9 ou 10,
**caractérisé en ce que** les reliefs annulaires (34) n'ont pas de bords à angles vifs.

12. Raccord (1) selon la revendication 11, **caractérisé en ce que**, en section selon tout plan contenant l'axe (30), les reliefs annulaires (34) présentent une forme de dents de scie, avec un côté long oblique (340) orienté du côté opposé au corps de raccord (2) et un côté court (341) orienté vers le corps de raccord (2), le côté court (341) et le côté long (340) étant connectés par une section arrondie (342).

13. Raccord (1) selon l'une quelconque des revendications précédentes, **caractérisé en ce que** la rainure en spirale (23) présente un pas variable le long de l'axe (30).
